# EUROPEAN PATENT SPECIFICATION

(11) **EP 4 611 524 B1**
(45) Date of publication and mention of the grant of the patent: **26.08.2026**
(21) Application number: 23817813.1
(22) Date of filing: 06.11.2023
(51) Int. Cl.: A01C 7/10, A01C 7/12

(54) **CALIBRATION TOOL FOR METERING UNITS FOR GRANULAR PRODUCTS AND SEEDS**
KALIBRIERWERKZEUG FÜR DOSIEREINHEITEN FÜR KÖRNIGE PRODUKTE UND SAMEN
OUTIL D'ÉTALONNAGE POUR UNITÉS DE DOSAGE DE PRODUITS GRANULAIRES ET DE SEMENCES

(30) Priority: 04.11.2022 IT 202200022803
(43) Date of publication of application: 10.09.2025
(73) Proprietor: Maschio Gaspardo S.p.A., 35011 Campodarsego (PD) (IT)
(72) Inventor: MASCHIO, Andrea, 33075 Morsano Al Tagliamento (PN) (IT); MARTIN, Rudy, 35142 Padova (IT); MICHIELI, Paolo, 33080 Zoppola (PN) (IT)
(74) Representative: Milan, Guglielmo
(86) International application number: PCT/IB2023/061171
(87) International publication number: WO 2024/095239

(56) References cited:
- EP-A1- 3 991 536
- DE-A1- 102007 034 997
- DE-A1- 102011 053 746
- DE-C1- 3 818 145
- GB-A- 609 989

## Description

### Technical field

The present invention relates to a calibration tool for volumetric metering units with a rotating distribution drum, of the type comprising an attachment device with respect to a calibration port of the metering unit and collection means for the calibration material which are secured to the attachment device.

### Technological background

Calibration tools including the above-mentioned features are known, for example, from https://youtube/CMPUyINqAhY. This document sets out a multi-row sowing machine with pneumatic distribution which is provided with volumetric metering units of the rotating distribution drum type which are used both for distributing the seed and for distributing the fertilizer and other granular materials. These metering units are used to supply an adjustable quantity of seed or fertilizer per unit of surface-area treated. The adjustment is carried out by means of an electronic control unit which provides for an initial step of calibration with which the quantity of granular material or seed supplied per revolution of the distribution drum is detected. This is carried out by opening in the metering unit a calibration port, to which a calibration bag is applied. By means of suitable instructions, therefore, the machine is actuated in order to rotate the distribution drum and the quantity supplied in a predetermined number of revolutions thereof is therefore weighed. The net weight of material supplied to the calibration bag and the desired quantity for the distribution per hectare constitute input data for programming the machine.

Before the step of calibration, the metering unit has to be equipped with the distribution drum which is suitable for the material to be distributed. This involves opening a suitable port of the metering unit, extracting the drum present and introducing the desired drum. All these steps of handling the calibration bag and replacing the drum of the volumetric metering unit involve a high level of dexterity, both in order to access the calibration receptacles and to manipulate the metering cylinders. The disadvantages are substantially connected with the fact that the seeds, fertilizers and the additives to be distributed over the ground often involve a specific degree of toxicity as a result of the composition of the products themselves or the chemical products associated therewith. Typically, the seeds are processed with tanning substances or fungicides which are harmful on contact and for inhalation. The fertilizers and the additives may release dangerous powders or ones which are at least irritants, or may contain dangerous products per se.

Other examples of solutions according to the prior art are described in GB609989A, DE102011053746A1, EP3991536A1, DE3818145C1 or DE102007034997A1.

### Description of the invention

The technical problem which the present invention seeks to solve at least partially is to provide a calibration tool for volumetric metering units with a rotating distribution drum and a kit comprising the tool, which are structurally and functionally configured to facilitate the calibration operations, minimizing the risks for the operator, overcoming at least some of the disadvantages set out with reference to the cited prior art.

An object of the invention is to minimize the contact of the operator with the contaminated surfaces of the volumetric metering unit.

Another object of the invention is to make the calibration tool self-supporting during the calibration step.

Another object of the invention is to facilitate the movement of the distribution drum, in particular the extraction/insertion of the distribution drum but also the handling thereof in general, reducing the risk of accident (for example, cuts to the skin or fingers being crushed) which can occur when using generic tools such as hammers or screwdrivers.

This problem is solved at least partially and these objects are achieved at least partially by means of a calibration tool for volumetric metering units with a rotating distribution drum according to one or more of the appended claims.

According to one aspect of the invention, a calibration tool for volumetric metering units with a rotating distribution drum comprises an attachment device with respect to a calibration port of the metering unit and collection means for the calibration material which are secured to the attachment device.

The attachment device comprises an engaging member which is provided to be removably engaged with the distribution drum in order to facilitate the movement thereof.

In this manner, with a single instrument, it is possible to not only engage the collection means with the calibration port of the metering unit, but also to handle the drum of the metering unit with great security and without any dangerous contact. Indeed, the operator can move and rotate the distribution drum without having to touch it by hand but simply by gripping the calibration tool. Furthermore, the calibration tool with the engaging member allows the extraction of the drum from the metering unit to be forced whenever the drum is blocked in the housing of the metering unit as a result of the granular material or seed becoming jammed.

Therefore, it will be appreciated that, in some embodiments, the engaging member can be provided to be removably engaged with the distribution drum in order to facilitate the extraction/insertion thereof, it remaining the case that preferably the object is also to facilitate the handling and movement of the drum generally, including outside the metering unit.

It may be noted that, in the present context, the term "collection means" is preferably synonymous with "collection device". The collection means comprise, for example, a calibration bag preferably having an opening which is secured to the attachment device in such a position that, when the tool is applied to the calibration port, the calibration bag is positioned to be fed by gravitational force from the calibration port.

In some embodiments, the same tool is provided with a handle which is fixed to the attachment device, preferably at the opposite side to the engaging member. This further simplifies the handling of the bag (or other collection means) without having to touch it by hand and further facilitates a secure grip during the handling both of the bag and of the drum.

In a preferred exemplary embodiment, the attachment device comprises a pair of walls which are placed in a spaced-apart relationship and preferably a cross-member which extends between the walls. In this manner, the walls and the cross-member confer rigidity on the structure of the tool.

In some embodiments, first engaging means are provided on the walls at the opposite side to the collection means. Advantageously, the first engaging means are capable of connection to respective first engaging counter-means which are provided on the calibration port.

Preferably, the engaging member comprises second engaging means on the cross-member which are capable of connection to respective second engaging counter-means which are provided on the distribution drum.

In some embodiments, the second engaging means comprise a recess which is formed in the cross-member. The recess advantageously allows engagement with an annular slot which is formed in the shaft of the distribution drum.

It is preferable for the opening of the recess to be directed towards the collection means in such a manner that the calibration tool can be engaged with the shaft of the drum with a movement downwards from above, maintaining the collection means in a substantially vertical position.

Preferably, the walls of the tool have a cam type profile which is extended beyond the cross-member at the side opposite the handle. The cam type profile promotes the handling of the drum during removal from and insertion into the respective housing in the metering unit.

According to another aspect, the present invention relates to a kit comprising a calibration tool constructed according to one or more of the above-mentioned features and a rotating distribution drum. Preferably, the drum has engaging counter-means which are capable of connection to the engaging member of the tool in order to facilitate the movement of the drum by means of the tool.

In some embodiments, the drum is supported on a shaft on which there is formed an annular slot which can be connected to the engaging member of the tool and particularly to the second engaging means of the tool. In order to facilitate the connection, it is preferable for the annular slot to be formed in the shaft in the portion thereof opposite the drum.

In some embodiments, the kit further comprises a flange by means of which the drum is rotatably supported with the respective shaft.

In a preferred exemplary embodiment, the kit comprises the tool and a metering unit which in turn comprises the rotating distribution drum with the respective shaft, a housing for the drum and preferably at least one closure flange for the housing. Preferably, the drum is rotatably supported by means of the respective shaft and the possible flange. The shaft preferably comprises engaging counter-means which are suitable for connection to the engaging member of the tool in order to facilitate the movement of the drum by means of the tool. The engaging counter-means preferably comprise an annular slot which is formed in the shaft in the portion thereof opposite the drum.

In some embodiments, the metering unit further comprises a calibration port which is provided with engaging counter-means which are suitable for connection to the attachment device of the tool in order to be able to engage the collection means with the calibration port of the metering unit.

### Brief description of the drawings

The features and advantages of the invention will be better understood from the following detailed description of a number of preferred though non-exclusive embodiments thereof which are illustrated with reference to the appended drawings, in which:
- Figure 1 is a perspective view of a calibration tool with which there has been engaged a rotating distribution drum according to an embodiment of the invention;
- Figure 2 is a perspective view of an agricultural machine, to which the tool of Figure 1 has been applied;
- Figures 3A and 3B are schematic illustrations of a volumetric metering unit during sowing and during calibration with the tool of Figure 1, respectively,
- Figure 4 is an exploded view of a volumetric metering unit with the respective rotating distribution drum, with which the tool of Figure 1 has been engaged;
- Figures 5 and 6 are perspective views of the tool and the drum which are illustrated in Figure 1, respectively;
- Figure 7 is a perspective view of a calibration tool with which there has been engaged a rotating distribution drum according to another embodiment of the invention.

### Preferred embodiment of the invention

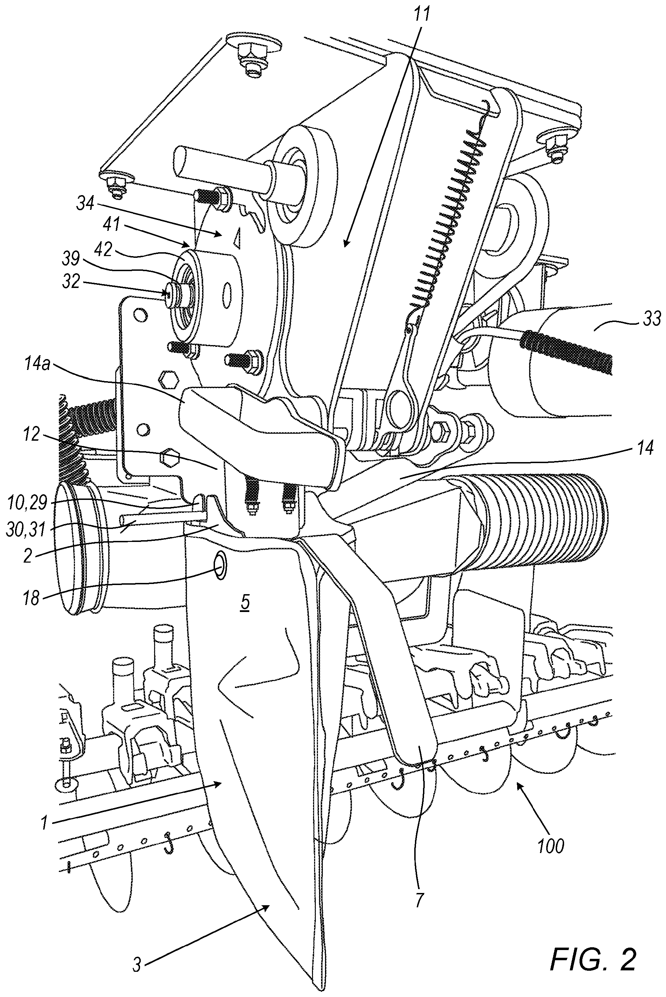

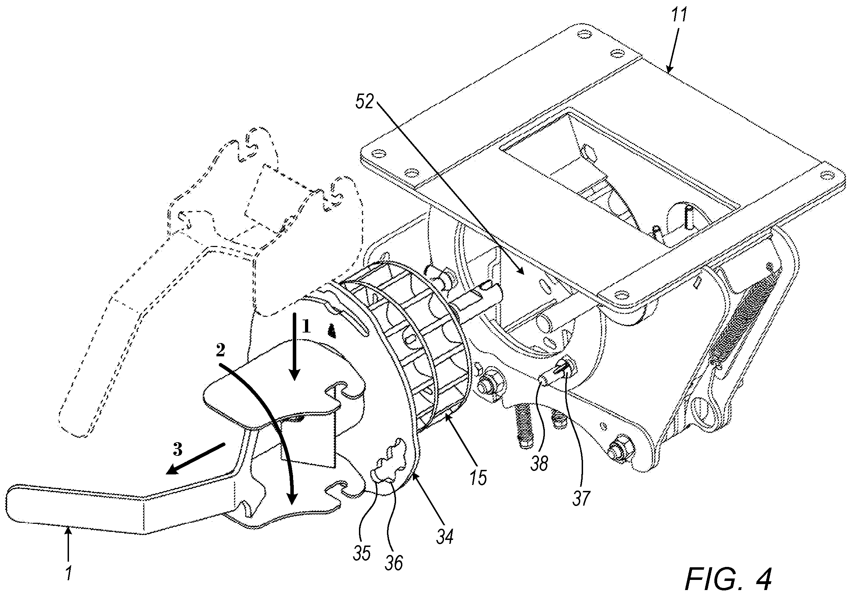

In Figure 2, there is designated 100 an exemplary agricultural machine for applying the present invention, generally a sower, which is provided with a volumetric metering unit 11 with a rotating distribution drum. The rotating distribution drum is shown, for example, in Figure 4, where it is generally designated 15.

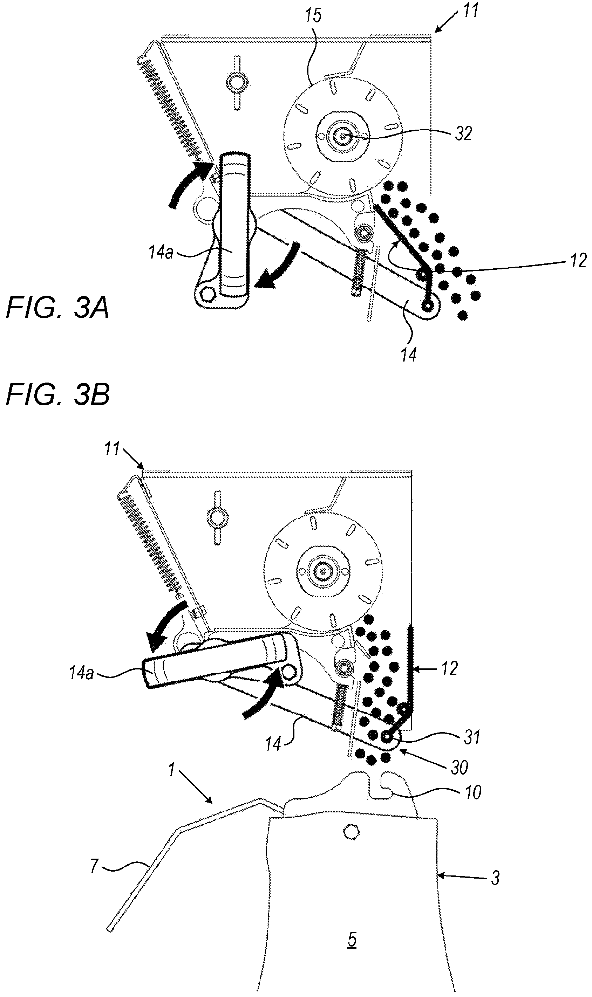

The metering unit 11 is provided with a calibration port 12 which can be opened by a control unit with a lever 14 (example of Figure 3A). For actuating the lever 14, there may be provided a handle 14a. A calibration tool which is generally designated 1 can be removably applied to the calibration port 12.

The tool 1 comprises an attachment device 2 with respect to the calibration port of the metering unit and collection means 3 for the calibration material, preferably including a calibration bag 5, the opening 6 of which is fixed, for example, by screws 18, to the attachment device 2.

The calibration tool 1 with the calibration bag 5 is preferably applied only in the calibration step of the machine 100, as shown in the example of Figure 3B (the calibration port 12 is further closed, as shown in the example of Figure 3A), and serves to receive and measure, by means of a balance which is not illustrated, the quantity of material supplied by the metering unit 11 in a predetermined number of revolutions of the distribution drum 15. The measurement obtained, before the supply over the whole field, serves to calibrate the quantity of material distributed per unit of surface-area. This quantity varies with the rotation speed of the distribution drum 15 and is a function of the number and volume of the cells which are formed on the distribution drum 15 and the speed of advance of the machine. The whole is controlled by an electronic system which is not illustrated.

Preferably, the calibration bag 5 is removable. The calibration tool 1 may therefore not be provided with a calibration bag 5 or the bag itself may be applied in another manner. However, it is preferable for the calibration bag 5 to be fixed by means of the screws 18 to the attachment device 2 with the opening being secured to the attachment device in such a position that, when the tool is applied to the calibration port 12, the calibration bag 5 is positioned in order to be supplied by gravitational force from the port 12. In a preferred solution, the distribution bag 5 is intended to be located exactly under the calibration port 12. The calibration tool 1 is preferably provided with a handle 7 which is fixedly joined to the attachment device 2.

The attachment device 2 preferably comprises two walls 8 which are opposite and spaced apart from each other and interconnected by means of the handle 7 at one side and by a cross-member 9 at the opposite side.

The walls 8 preferably have holes 27 for the screws 18, by means of which the calibration bag 5 is fixed to the attachment device 2. However, different fixing means may be used, for example, rivets, tearing type fixing devices (of the type known under the mark Velcro), or the like. The walls 8 further have, preferably at the side opposite the bag 5 and in any case in a suitable position as explained below, first releasable engaging means 10 with which the attachment device 2 can be removably engaged with the calibration port 12, under it, in order to be supplied with the material to be supplied through the metering unit 11 by gravitational force.

The first engaging means 10 are similar to first engaging counter-means 30 which are provided on the calibration port 12. For example, the first engaging counter-means are formed by pins 31, as illustrated in the example of Figure 2. In this case, the first engaging means 10 may be advantageously configured with an open slot 29 which is suitable for being engaged with these pins 31. In this sense, the reference to a suitable engaging position is intended to be understood to indicate a positioning and a relative formation of the first engaging means and counter-means 10, 30 so as to promote mutual connection for the above-indicated purpose.

Preferably, the handle 7 is in the form of a cantilever handle which extends from the walls 8 and which is bent in an opposite direction to the first engaging means 10. This configuration allows good manoeuvrability of the tool 1 in all conditions of use thereof. It may be noted that, in this context, the term "cantilever" is intended to be understood to mean preferably a rigid structural element which extends so as to project particularly in the manner of a shelf and which is preferably supported only at one end.

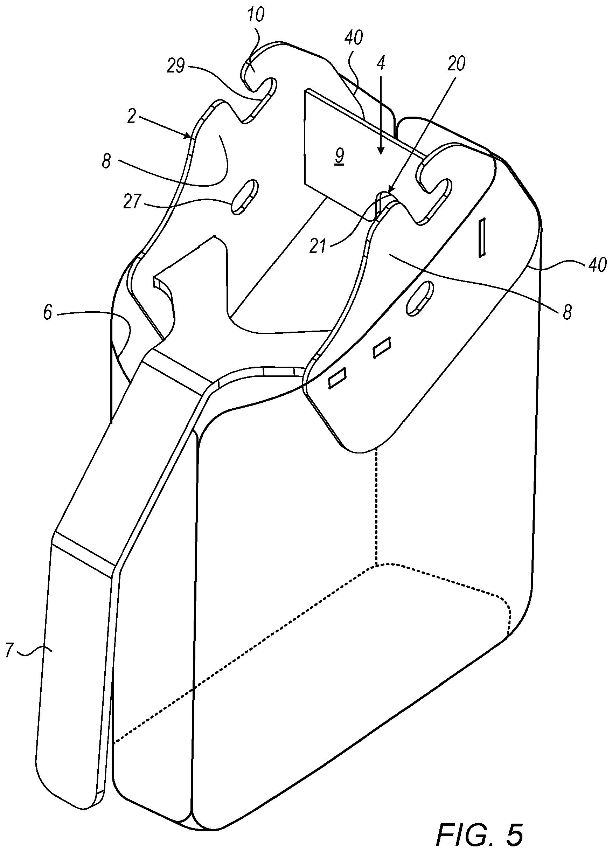

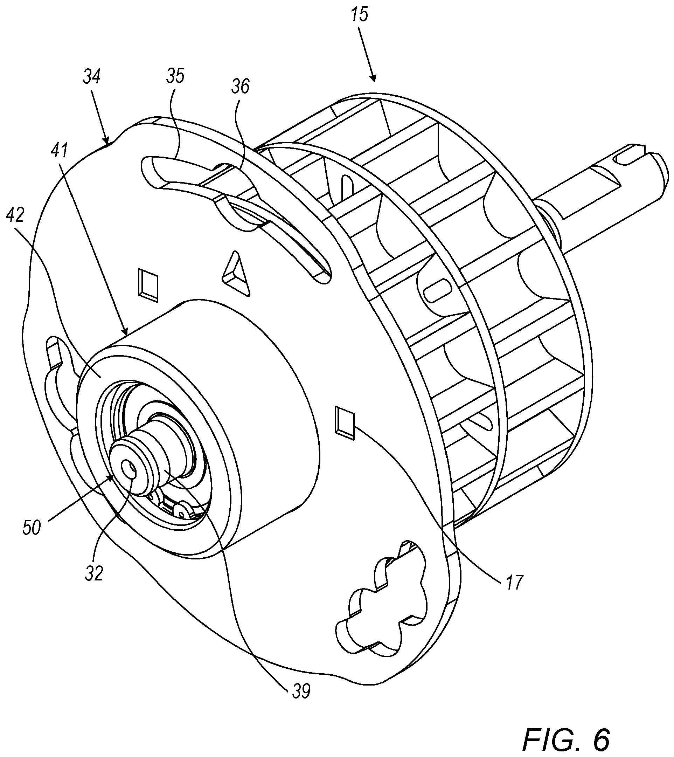

The attachment device 2 comprises an engaging member 4 which is provided to be removably engaged with the distribution drum 15 in order to facilitate the movement thereof. In particular, the engaging member 4 comprises second engaging means 20 on the cross-member 9 (example of Figure 5) which are suitable for connection to respective second engaging counter-means 50 of the distribution drum (example of Figure 6). The second engaging means 20 may comprise, for example, a recess 21 which is formed in the cross-member 9. The second engaging counter-means 50 may comprise, for example, an annular slot 39 which is formed in the shaft 32 of the distribution drum.

Preferably, therefore, there is formed in the cross-member 9 a recess 21 and the walls 8 have at the opposite side to the handle 7 a profile 40 which is formed and arranged in relation to the recess 21 in such a manner that there is produced a function of engaging the distribution drum 15, as explained below.

The distribution drum 15 is mounted and rotated preferably by means of a shaft 32 which is connected in terms of rotation to a motorization unit 33 (in the example of Figure 2, in the form of a gear motor) of the volumetric metering unit. The shaft 32 is preferably supported on a flange 34 which is provided to removably close the housing 52 of the drum 15 in the body of the metering unit 11, at the side opposite the motorization unit 33. The housing 52 is shown in the example of Figure 4.

The flange 34 is preferably of the type with a rapid attachment, for example, providing slots 35 which are centrally provided with a widened portion 36 which allows the passage of a nut or wing nut 37. The nuts or wing nuts 37 are screwed on respective threaded pins 38 and can pass through the widened portion 36 but not the remaining portion of the slots 35 so that, by rotating the flange 34 until the nuts or wing nuts 37 are aligned with the widened portions 36, it is possible to remove the flange 34 from the metering unit 11 while it remains axially retained in the remaining positions.

As shown in the example of Figure 6, in some embodiments the flange 34 has centrally a support 41 with a collar 42 which projects at the opposite side to the drum 15 in such a manner that it is outside the metering unit when the drum is inserted in its housing 52. Advantageously, the shaft 32 has a section which projects beyond the collar 42 which has an annular slot 39 which is suitable for being connected by engaging with the recess 21 of the cross-member 9.

As shown in the example of Figure 5, it is preferable for the opening of the recess 21 to be directed towards the calibration bag 5 so that the calibration tool 1 can be engaged with the shaft 32 of the drum with a movement downwards from above, maintaining the calibration bag 5 in a substantially vertical position. Subsequently, in order to securely retain the flange 34 with the relevant shaft 32 and the drum 15 mounted thereon with the calibration tool 1, it is preferable to rotate the tool 1 about the axis of the shaft 32 through a specific angle, as shown in the example of Figure 4.

Now with reference to the example of Figure 2, the walls 8 preferably have a cam type profile 40 which is extended beyond the cross-member 9 at the side opposite the handle 7, the formation and position of which with respect to the cross-member is such that the cam type profile 40 interacts with the flange 34 and with the connection between the recess 21 of the cross-member 9 and the annular slot 39, blocking the flange 34 with the relevant shaft 32 and the drum 15 mounted thereon with the calibration tool 1, thereby promoting the handling of the drum 15 during removal from and insertion into its housing 52 in the metering unit 11. It will be appreciated that this solution promotes not only the axial movement of the distribution drum but also the rotational movement thereof and the handling thereof in general.

In some embodiments, the walls 8 have form-fitting means which are preferably extended beyond the cross-member 9 at the opposite side to the handle 7 and which are configured to be connected to corresponding counter-means which are formed on the flange 34 so as to be able to rotate the flange together with the tool. Naturally, this configuration also allows the tool to rotate the drum together with the flange.

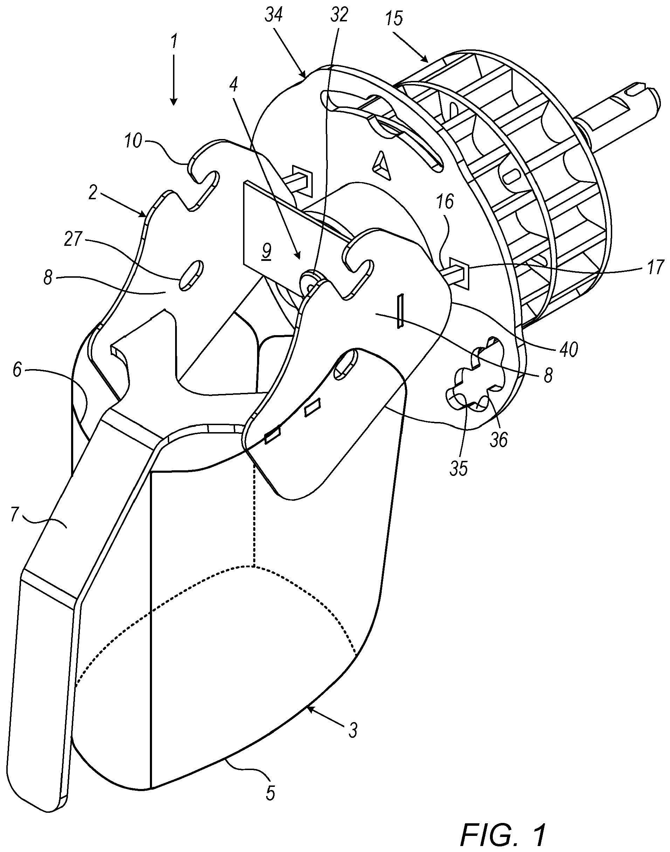

As shown in the example of Figure 1, the form-fitting means may comprise one or more teeth 16. In particular, the walls 8 have one or more teeth 16 which project beyond the cross-member 9 at the opposite side to the handle 7. The teeth 16 are suitable for being engaged with corresponding recesses 17 which are formed in the flange 34 in order to be able to rotate the flange together with the calibration tool.

Naturally, the teeth 16 and the recesses 17 are illustrated in Figures 1 and 6 purely by way of non-limiting example and can be replaced with other form-fitting means.

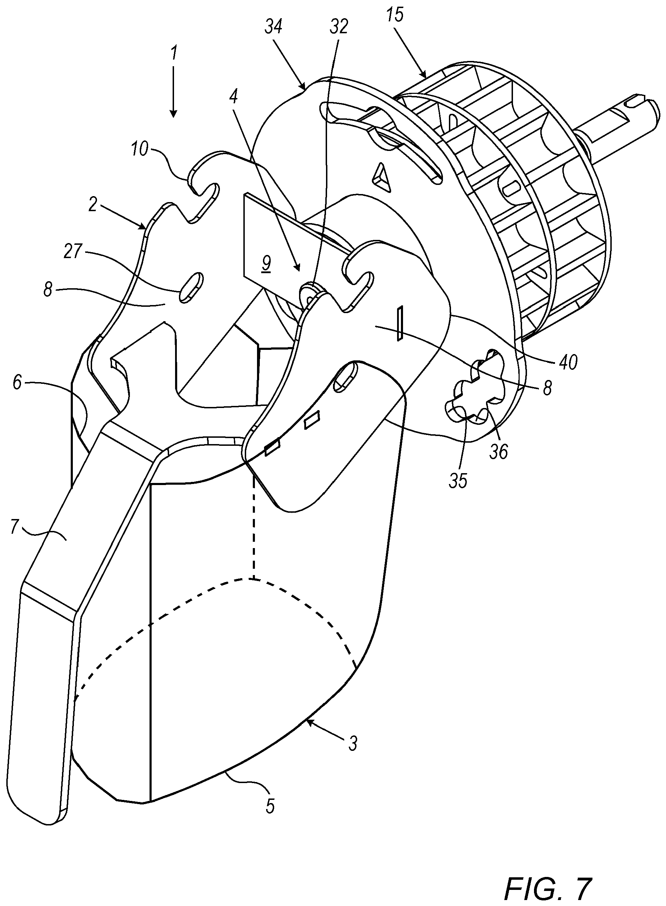

In the example of Figure 7, in particular, the form-fitting means substantially comprise the cam type profile 40 which projects beyond the cross-member 9 at the opposite side to the handle 7. The cam type profile 40 promotes the connection as a result of pressure against the surface of the flange 34 so as to allow the surface of the flange 34 to be drawn in terms of rotation together with the tool as a result of friction. Naturally, this configuration also allows the tool to rotate the drum together with the flange.

In this case, the tool 1 does not need teeth 16 and the surface of the flange 34 does not need recesses 17.

In some embodiments, the calibration bag 5 is made of flexible material, for example, textile fibres. It is thereby possible to readily move or remove the bag with respect to the attachment device 2 whenever portions thereof are an impediment during the connection of the tool 1 to the drum 15 or the calibration port 12.

In order to use the calibration tool of this invention during the calibration of the volumetric metering unit 11, it is simply necessary to engage by means of the first engaging means 10 and the pins 31 the attachment device 2 with the relevant calibration bag 5 under the calibration port 12, as shown in the example of Figure 2. Therefore, the calibration port 12 opens by means of the lever 14 or handle 14a, as shown in the example of Figure 3B and the drum 15 is caused to rotate for a predetermined number of revolutions, bringing about the fall of a quantity of granular material into the bag 5. The calibration port 12 is therefore closed and the calibration tool 1 with the relevant bag 5 is removed and weighed. Once the net weight of the material contained in the calibration bag 5 is calculated, it is used as an input data item for the control system of the sower. If necessary, beforehand there is carried out the replacement of the drum 15 with another drum suitable for the intended operation. The operation is carried out by engaging the calibration tool 1 by connecting the annular slot 39 in the recess 21 of the cross-member 9 in order to extract the drum from its housing 52 and to replace it as desired. The reverse operation allows the reinsertion thereof in the housing 52.

The invention thereby solves the problem proposed, providing a rational solution with contained costs and consequently at the same time a number of advantages, including:
- reducing the risk of accidents by using an ergonomic and specific tool for extracting the distribution drum;
- avoiding standing near the metering unit during the calibration step, reducing or eliminating the risk of inhalation of contaminated powder emitted during the falling/calibrating step;
- reducing the risk of contamination as a result of contact or inhalation of contaminated powder during the step of replacing the distribution drum;
- reducing the risk of accidents connected with the handling of heavy or sharp objects (for example, hammers or screwdrivers);
- reducing the risk of accidents connected with the possibility that, as a result of operator error, gloves, individual protection devices or parts of the body remain located in the distribution drum and are drawn in rotation thereby.

## Claims

1. A calibration tool (1) for volumetric metering units with a rotating distribution drum, comprising an attachment device (2) with respect to a calibration port of the metering unit and collection means (3) for the calibration material which are secured to the attachment device, **characterized in that** the attachment device (2) comprises an engaging member (4) which is provided to be removably engaged with the distribution drum in order to facilitate the movement thereof.

2. The calibration tool (1) according to claim 1, wherein the collection means (3) of the calibration material comprise a calibration bag (5) having an opening (6) which is secured to the attachment device (2) in such a position that, when the tool (1) is applied to the calibration port, the calibration bag (5) is positioned to be fed by gravitational force from the calibration port.

3. The calibration tool (1) according to claim 1 or 2, further comprising a handle (7) which is fixed to the attachment device (2).

4. The calibration tool (1) according to claim 3, wherein the handle (7) is fixed to the attachment device (2) at the side opposite the engaging member (4).

5. The calibration tool (1) according to one or more of the preceding claims, wherein the attachment device (2) comprises a pair of walls (8) which are placed in a spaced-apart relationship, a cross-member (9) which extends between the walls (8) and first engaging means (10) on the walls (8) at the opposite side to the collection means (3), the first engaging means (10) being capable of connection to respective first engaging counter-means which are provided on the calibration port.

6. The calibration tool (1) according to claim 5, wherein the engaging member (4) comprises second engaging means (20) on the cross-member (9) which are capable of connection to respective second engaging counter-means which are provided on the distribution drum.

7. The calibration tool (1) according to claim 6, wherein the second engaging means (20) comprise a recess (21) which is formed in the cross-member (9).

8. The calibration tool (1) according to claim 7, wherein the recess (21) is open towards the collection means (3).

9. The calibration tool (1) according to one or more of claims 5 to 8 when dependent on claim 3, wherein the walls (8) have a cam type profile (40) which is extended beyond the cross-member (9) at the side opposite the handle (7).

10. The calibration tool (1) according to one or more of claims 5 to 9 when dependent on claim 3, wherein the walls (8) have one or more teeth (16) which are extended beyond the cross-member (9) at the side opposite the handle (7).

11. The calibration tool (1) according to one or more of the preceding claims, wherein the engaging member (4) is provided to be removably engaged with the distribution drum in order to facilitate the extraction/insertion thereof.

12. A kit comprising a calibration tool (1) according to one or more of the preceding claims and a rotating distribution drum (15), wherein the drum (15) has engaging counter-means (50) which are capable of connection to the engaging member (4) of the tool in order to facilitate the movement of the drum (15) by means of the tool (1).

13. The kit according to claim 12, wherein the distribution drum (15) is supported on a shaft (32) on which there is formed an annular slot (39) which is suitable for connection with the engaging member (4) of the tool.

14. The kit according to claim 13, comprising a flange (34) by means of which the distribution drum (15) is rotatably supported with the respective shaft (32).

15. The kit according to claim 13 or 14, comprising a metering unit which in turn comprises the rotating distribution drum (15) with the respective shaft (32) and a housing for the distribution drum.

## Patentansprüche

1. Kalibrierwerkzeug (1) für volumetrische Dosiereinheiten mit einer rotierenden Verteilungstrommel, das eine Befestigungsvorrichtung (2) in Bezug auf eine Kalibrieröffnung der Dosiereinheit und eine Sammeleinrichtung (3) für das Kalibriermaterial aufweist, die an der Befestigungsvorrichtung befestigt ist, **dadurch gekennzeichnet, dass** die Befestigungsvorrichtung (2) ein Eingriffselement (4) aufweist, das vorgesehen ist, um lösbar mit der Verteilungstrommel in Eingriff gebracht zu werden, um deren Bewegung zu ermöglichen.

2. Kalibrierwerkzeug (1) nach Anspruch 1, wobei die Sammeleinrichtung (3) für das Kalibriermaterial einen Kalibrierbeutel (5) mit einer Öffnung (6) aufweist, der an der Befestigungsvorrichtung (2) in einer derartigen Position befestigt ist, dass, wenn das Werkzeug (1) an der Kalibrieröffnung angebracht wird, der Kalibrierbeutel (5) positioniert wird, um durch die Schwerkraft aus der Kalibrieröffnung beschickt zu werden.

3. Kalibrierwerkzeug (1) nach Anspruch 1 oder 2, das ferner einen Griff (7) aufweist, der an der Befestigungsvorrichtung (2) fixiert ist.

4. Kalibrierwerkzeug (1) nach Anspruch 3, wobei der Griff (7) an der dem Eingriffselement (4) gegenüberliegenden Seite an der Befestigungsvorrichtung (2) fixiert ist.

5. Kalibrierwerkzeug (1) nach einem oder mehreren der vorhergehenden Ansprüche, wobei die Befestigungsvorrichtung (2) ein Paar Wände (8), die in einem Abstand zueinander angeordnet sind, ein Querelement (9), das sich zwischen den Wänden (8) erstreckt, und erste Eingriffsmittel (10) an den Wänden (8) auf der der Sammeleinrichtung (3) gegenüberliegenden Seite aufweist, wobei die ersten Eingriffsmittel (10) mit entsprechenden ersten Eingriffsgegenmitteln verbindbar sind, die an der Kalibrieröffnung vorgesehen sind.

6. Kalibrierwerkzeug (1) nach Anspruch 5, wobei das Eingriffselement (4) zweite Eingriffsmittel (20) am Querelement (9) aufweist, die mit entsprechenden zweiten Eingriffsgegenmitteln verbindbar sind, die an der Verteilungstrommel vorgesehen sind.

7. Kalibrierwerkzeug (1) nach Anspruch 6, wobei die zweiten Eingriffsmittel (20) eine Aussparung (21) aufweisen, die im Querelement (9) ausgebildet ist.

8. Kalibrierwerkzeug (1) nach Anspruch 7, wobei die Aussparung (21) in Richtung der Sammeleinrichtung (3) offen ist.

9. Kalibrierwerkzeug (1) nach einem oder mehreren der Ansprüche 5 bis 8, sofern abhängig von Anspruch 3, wobei die Wände (8) ein nockenartiges Profil (40) aufweisen, das sich über das Querelement (9) auf der dem Griff (7) gegenüberliegenden Seite hinaus erstreckt.

10. Kalibrierwerkzeug (1) nach einem oder mehreren der Ansprüche 5 bis 9, sofern abhängig von Anspruch 3, wobei die Wände (8) einen oder mehrere Zähne (16) aufweisen, die sich über das Querelement (9) auf der dem Griff (7) gegenüberliegenden Seite hinaus erstrecken.

11. Kalibrierwerkzeug (1) nach einem oder mehreren der vorhergehenden Ansprüche, wobei das Eingriffselement (4) vorgesehen ist, um lösbar mit der Verteilungstrommel in Eingriff zu stehen, um deren Entnahme/Einsetzen zu ermöglichen.

12. Bausatz mit einem Kalibrierwerkzeug (1) nach einem oder mehreren der vorhergehenden Ansprüche und mit einer rotierenden Verteilungstrommel (15), wobei die Trommel (15) Eingriffsgegenmittel (50) aufweist, die mit dem Eingriffselement (4) des Werkzeugs verbindbar sind, um die Bewegung der Trommel (15) mittels des Werkzeugs (1) zu ermöglichen.

13. Bausatz nach Anspruch 12, wobei die Verteilungstrommel (15) auf einer Welle (32) gelagert ist, auf der ein ringförmiger Schlitz (39) ausgebildet ist, der zur Verbindung mit dem Eingriffselement (4) des Werkzeugs geeignet ist.

14. Bausatz nach Anspruch 13, der einen Flansch (34) aufweist, mittels dem die Verteilungstrommel (15) rotierbar auf der jeweiligen Welle (32) gelagert ist.

15. Bausatz nach Anspruch 13 oder 14, der eine Dosiereinheit aufweist, die wiederum die rotierende Verteilungstrommel (15) mit der jeweiligen Welle (32) und ein Gehäuse für die Verteilungstrommel aufweist.

## Revendications

1. Outil d'étalonnage (1) pour des unités de dosage volumétrique avec un tambour de distribution rotatif, comprenant un dispositif de fixation (2) par rapport à un orifice d'étalonnage de l'unité de dosage et des moyens de collecte (3) pour le matériau d'étalonnage qui sont fixés au dispositif de fixation, **caractérisé en ce que** le dispositif de fixation (2) comprend un élément d'engagement (4) qui est prévu pour être engagé de manière amovible avec le tambour de distribution afin de faciliter le déplacement de celui-ci.

2. Outil d'étalonnage (1) selon la revendication 1, dans lequel les moyens de collecte (3) du matériau d'étalonnage comprennent un sac d'étalonnage (5) ayant une ouverture (6) qui est fixée au dispositif de fixation (2) dans une position telle que, lorsque l'outil (1) est appliqué sur l'orifice d'étalonnage, le sac d'étalonnage (5) est positionné de manière à être alimenté par la force de gravité depuis l'orifice d'étalonnage.

3. Outil d'étalonnage (1) selon la revendication 1 ou 2, comprenant en outre une poignée (7) qui est fixée au dispositif de fixation (2).

4. Outil d'étalonnage (1) selon la revendication 3, dans lequel la poignée (7) est fixée au dispositif de fixation (2) du côté opposé à l'élément d'engagement (4).

5. Outil d'étalonnage (1) selon une ou plusieurs des revendications précédentes, dans lequel le dispositif de fixation (2) comprend une paire de parois (8) qui sont placées dans une relation espacée, un élément transversal (9) qui s'étend entre les parois (8) et des premiers moyens d'engagement (10) sur les parois (8) du côté opposé aux moyens de collecte (3), les premiers moyens d'engagement (10) étant aptes à être reliés à des premiers contre-moyens d'engagement respectifs qui sont prévus sur l'orifice d'étalonnage.

6. Outil d'étalonnage (1) selon la revendication 5, dans lequel l'élément d'engagement (4) comprend des seconds moyens d'engagement (20) sur l'élément transversal (9) qui sont aptes à être reliés à des seconds contre-moyens d'engagement respectifs qui sont prévus sur le tambour de distribution.

7. Outil d'étalonnage (1) selon la revendication 6, dans lequel les seconds moyens d'engagement (20) comprennent un évidement (21) qui est formé dans l'élément transversal (9).

8. Outil d'étalonnage (1) selon la revendication 7, dans lequel l'évidement (21) est ouvert vers les moyens de collecte (3).

9. Outil d'étalonnage (1) selon une ou plusieurs des revendications 5 à 8 lorsqu'elles sont subordonnées à la revendication 3, dans lequel les parois (8) ont un profil de type came (40) qui s'étend au-delà de l'élément transversal (9) du côté opposé à la poignée (7).

10. Outil d'étalonnage (1) selon une ou plusieurs des revendications 5 à 9 lorsqu'elles sont subordonnées à la revendication 3, dans lequel les parois (8) ont une ou plusieurs dents (16) qui s'étendent au-delà de l'élément transversal (9) du côté opposé à la poignée (7).

11. Outil d'étalonnage (1) selon une ou plusieurs des revendications précédentes, dans lequel l'élément d'engagement (4) est prévu pour être engagé de manière amovible avec le tambour de distribution afin de faciliter l'extraction/l'insertion de celui-ci.

12. Kit comprenant un outil d'étalonnage (1) selon une ou plusieurs des revendications précédentes et un tambour de distribution (15) rotatif, dans lequel le tambour (15) a des contre-moyens d'engagement (50) qui sont aptes à être reliés à l'élément d'engagement (4) de l'outil afin de faciliter le déplacement du tambour (15) au moyen de l'outil (1).

13. Kit selon la revendication 12, dans lequel le tambour de distribution (15) est supporté sur un arbre (32) sur lequel est formée une fente annulaire (39) qui est adaptée pour être reliée à l'élément d'engagement (4) de l'outil.

14. Kit selon la revendication 13, comprenant une bride (34) au moyen de laquelle le tambour de distribution (15) est supporté de manière rotative avec l'arbre respectif (32).

15. Kit selon la revendication 13 ou 14, comprenant une unité de dosage qui comprend à son tour le tambour de distribution (15) rotatif avec l'arbre respectif (32) et un boîtier pour le tambour de distribution.
